# EUROPEAN PATENT SPECIFICATION

(11) **EP 3 361 060 B1**
(45) Date of publication and mention of the grant of the patent: **08.07.2020**
(21) Application number: 17155888.5
(22) Date of filing: 13.02.2017
(51) Int. Cl.: F01D 25/12, F01D 25/26

(54) **COOLING SYSTEMS FOR CAVITIES BETWEEN INNER AND OUTER CASINGS**
KÜHLSYSTEME FÜR HOHLRÄUME ZWISCHEN INNEREN UND ÄUSSEREN GEHÄUSEN
SYSTÈMES DE REFROIDISSEMENT POUR DES CAVITÉS ENTRE DES ENVELOPPES INTERNES ET EXTERNES

(43) Date of publication of application: 15.08.2018
(73) Proprietor: General Electric Technology GmbH, 5400 Baden (CH)
(72) Inventor: ABATE, Pancrazio, 5400 CH Baden (CH)
(74) Representative: BRP Renaud & Partner mbB Rechtsanwälte Patentanwälte Steuerberater

(56) References cited:
- EP-A2- 1 967 693
- EP-A2- 2 372 105
- WO-A1-2013/110765
- DE-A1-102006 010 863

## Description

### BACKGROUND

The present disclosure relates generally to systems that include cavities defined between inner and outer casings, and, more particularly, to systems for providing cooling fluid to such cavities.

At least some known systems, including rotary machines such as gas turbine engines, include an outer casing spaced circumferentially about an inner casing and defining a generally annular cavity therebetween. In some known systems, cooling fluid, such as air from a compressor, is supplied to the cavity through conduits coupled to the outer casing at selected locations along an axis of the casing. The cooling fluid may cool the inner casing and/or be provided for cooling of components coupled radially inwardly of the inner casing, such as stationary vanes of the rotary machine. However, in at least some cases, circulation of cooling air within the cavity is substantially non-uniform. Uneven cooling may result in the casings becoming out of round, and a design of the casings may be limited by a requirement to accommodate the potential out-of-round condition. Moreover, for at least some systems, modification of the supply conduits is limited by a need to fit the conduits through components and support fixtures that surround the outer casing.

EP 1 967 693 A2 suggests a method to repair a defect in a splitter fairing of a turbine engine by removing a forward portion of the splitter fairing and salvaging the remaining original portion of the splitter fairing. The forward portion includes an inner flange and outer surface that create a channel. A replacement ring is provided and welded to the original portion. The replacement ring has minimum dimensions equal to the maximum height and width of the removed forward portion. Material from the replacement ring is then removed to obtain a profile with essentially the same profile for the inner flange, outer surface, and channel as the original dimensions of the splitter fairing before the defect occurred.

In DE 10 2006 010 863 A1 a turbo machine is disclosed that has a housing containing a rotor where the cooling air for the rotor is supplied from outside the housing via a rotor cooling air path designed so that the cooling air impinges on the guide vane support upstream of the rotor. A rotor cooling chamber in the housing is connected to the cooling air path and is defined at least in part by the guide vane support.

WO 2013/110765 A1 relates to a turbine and generator housing having a cavity for accommodating a turbine and/or a generator, wherein the cavity is formed by an end-side wall and is surrounded by a side wall which extends substantially parallel to a longitudinal axis of the housing. The housing comprises one or more supply ducts and one or more discharge ducts for the supply and discharge of a cooling fluid into and out of the housing, wherein, in the side wall, there runs an annular chamber which is separated from the cavity by a wall portion of the side wall and which radially surrounds the cavity. The side wall comprises a tubular sleeve which delimits the side wall radially to the outside. The supply and discharge ducts communicate fluidically with one or more first and second ducts which are formed by an insert part which can be inserted into the side wall.

### BRIEF DESCRIPTION

A system for a rotary machine according to claim 1 is provided.

### BRIEF DESCRIPTION OF THE DRAWINGS

FIG. 1 is a schematic illustration of an exemplary rotor machine 10.
FIG. 2 is a schematic illustration of an exemplary conduit coupled to an outer casing of the rotary machine shown in FIG. 1;
FIG. 3 is a schematic perspective illustration of an embodiment showing a conduit coupled to an outer casing of the rotary machine shown in FIG. 1; and
FIG. 4 is a schematic perspective illustration of an embodiment showing a conduit coupled to an outer casing of the rotary machine shown in FIG. 1.

### DETAILED DESCRIPTION

Embodiments of the present disclosure include systems that facilitate more uniform distribution of cooling fluid to a cavity defined between an inner casing and an outer casing. Some embodiments include supply conduits coupled to the outer casing and oriented at an acute angle relative to an axis of the casing. Additionally or alternatively, certain embodiments include supply conduits having an axially asymmetric cross-section that extends across substantially an entire axial length of the cavity. In some such embodiments, the orientation and/or shape of the conduit facilitates more uniform cooling fluid circulation along an axial length of the cavity, and/or facilitates routing of the conduits between external components that surround the outer casing.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Approximating language may be applied to modify any quantitative representation that could permissibly vary without resulting in a change in the basic function to which it is related. Accordingly, a value modified by a term or terms, such as "about," "approximately," and "substantially," is not to be limited to the precise value specified. In at least some instances, the approximating language may correspond to the precision of an instrument for measuring the value. Here and throughout the specification and claims, range limitations may be identified. Such ranges may be combined and/or interchanged, and include all the sub-ranges contained therein unless context or language indicates otherwise.

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

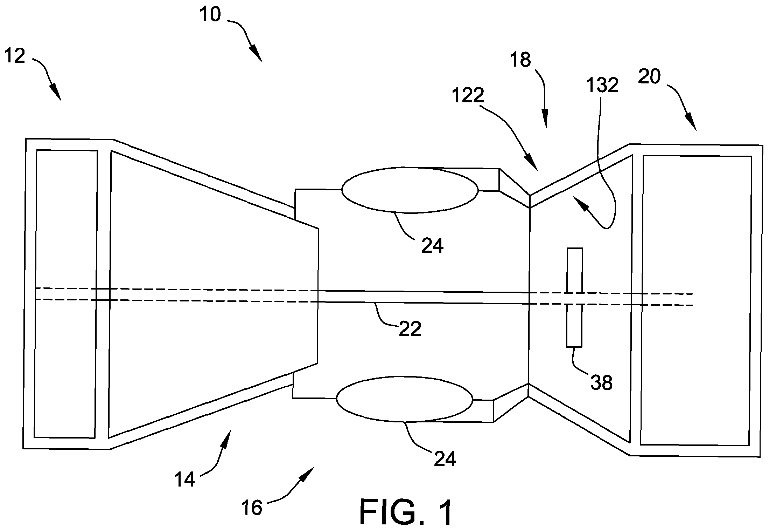

FIG. 1 is a schematic view of an exemplary rotary machine 10. In the exemplary embodiment, rotary machine 10 is a gas turbine engine. Alternatively, rotary machine 10 is any other turbine engine and/or rotary machine, including, without limitation, a gas turbine engine, a gas turbofan aircraft engine, other aircraft engine, a wind turbine, a compressor, and/or a pump. In other alternative embodiments, the cooling system of the present disclosure is applicable to any type of system in which it may be desirable to cool a cavity defined by an outer shell spaced circumferentially about an inner shell.

In the exemplary embodiment, rotary machine 10 includes an intake section 12, a compressor section 14 coupled downstream from intake section 12, a combustor section 16 coupled downstream from compressor section 14, a turbine section 18 coupled downstream from combustor section 16, and an exhaust section 20 coupled downstream from turbine section 18. Turbine section 18 is coupled to compressor section 14 via an axially extending rotor shaft 22. It should be noted that, as used herein, the term "couple" is not limited to a direct mechanical, electrical, and/or communication connection between components, but may also include an indirect mechanical, electrical, and/or communication connection between multiple components. An inner casing 132 at least partially encloses one or more of intake section 12, compressor section 14, combustor section 16, turbine section 18, and exhaust section 20. An outer casing 122 extends circumferentially about inner casing 132. Each casing 132 and 122 is generally tubular in shape, although not limited to a circular cross-section, an axially symmetric cross-section, or a constant cross-section along an axis thereof. Moreover, each casing 132 and 122 may be formed from a plurality of separate casing portions that at least partially enclose different portions of rotary machine 10.

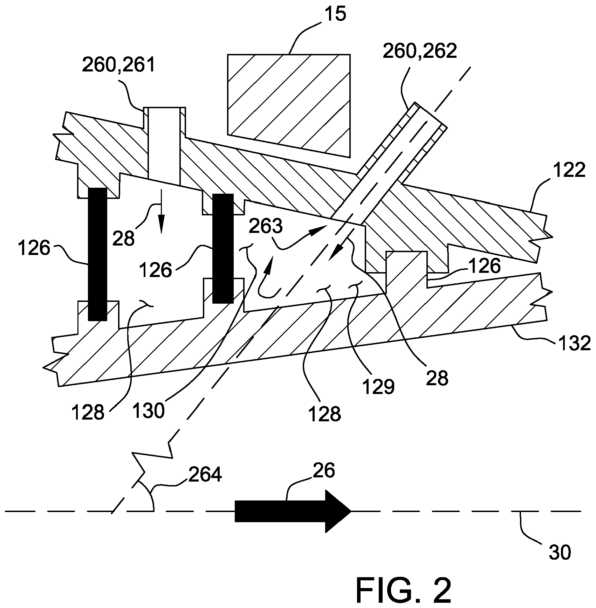

FIG. 2 is a schematic sectional view of a first exemplary conduit 260 coupled to outer casing 122 of rotary machine 10. With reference to FIGs. 1 and 2, outer casing 122 is spaced radially outward from inner casing 132 such that at least one generally annular cavity 128 is defined therebetween. A plurality of radially and circumferentially extending partitions 126 are coupled between casings 122 and 132, such that a plurality of cavities 128 are defined. Alternatively, axial ends of each at least one cavity 128 are defined in any suitable fashion.

During operation of rotary machine 10, intake section 12 channels air towards compressor section 14. Compressor section 14 compresses the air to a higher pressure and temperature and discharges the compressed air towards combustor section 16. In combustor section 16, the compressed air is mixed with fuel and ignited to generate combustion gases 26 that are channeled towards turbine section 18. More specifically, combustor section 16 includes at least one combustor 24, in which a fuel, for example, natural gas and/or fuel oil, is injected into the air flow, and the fuel-air mixture is ignited to generate high temperature combustion gases 26 that are channeled towards turbine section 18.

Turbine section 18 converts the thermal energy from combustion gas stream 26 to mechanical rotational energy, as combustion gases 26 impart rotational energy to at least one rotor blade 38 coupled to rotor shaft 22 within turbine section 18. Rotor shaft 22 may be coupled to a load (not shown) such as, but not limited to, an electrical generator and/or a mechanical drive application. The exhausted combustion gases 26 flow downstream from turbine section 18 into exhaust section 20. A temperature of combustion gases 26 tends to cause heating of inner casing 132 and/or components (not shown) of rotary machine coupled radially inwardly of inner casing 132.

To facilitate cooling of inner casing 132 and/or components of rotary machine 10 coupled radially inwardly of inner casing 132, at least one conduit 260 is coupled to outer casing 122 in flow communication with the at least one cavity 128. For example, at least one conduit 260 is coupled to outer casing 122 by suitable fasteners, such as bolts. Additionally or alternatively, at least one conduit 260 is coupled to outer casing 122 by welding, clamping, or in any other suitable fashion that enables conduit 260 to function as described herein. Each conduit 260 is coupled to outer casing 122 at any suitable location around a circumference of outer casing 122.

Each conduit 260 is also coupled to a suitable source (not shown) of cooling fluid 28, such that conduit 260 is configured to deliver a stream of cooling fluid 28 to cavity 128. For example, but not by way of limitation, conduit 260 is configured to receive at least one of air discharged from compressor section 14 and air extracted from a suitable intermediate stage of compressor section 14.

At least one conduit 260, such as conduit 261 shown in FIG. 2, is oriented at approximately a 90-degree angle relative to a longitudinal axis 30 of outer casing 122, which is also longitudinal axis 30 of inner casing 132, to facilitate suitable cooling within the corresponding cavity 128. However, an axial width of at least one chamber 128 is sufficiently large such that conduit 260 oriented at approximately a 90-degree angle would result in undesirably non-uniform circulation of cooling fluid 28 along an axial extent of the corresponding cavity 128. In some such embodiments, At least one conduit 260, such as conduit 262 shown in FIG. 2, is oriented at an acute angle 264 relative to axis 30. Conduit 262 oriented at an acute angle, that is, an angle less than ninety degrees, facilitates more uniform circulation of cooling fluid 28 within the corresponding cavity 128, as compared to conduit 261 oriented at approximately 90 degrees. For example, conduit 262 oriented at acute angle 264 facilitates improved air circulation within a portion 130 of cavity 128 that is axially spaced from an outlet 263 of conduit 262, as well as a portion 129 of cavity 128 that is axially adjacent to outlet 263. Acute angle 264 within a range of about 20 degrees to about 80 degrees facilitates sufficiently uniform circulation of cooling air 28 within the corresponding cavity 128. Acute angle 264 within a range of about 30 degrees to about 60 degrees facilitates sufficiently uniform circulation of cooling air 28 within the corresponding cavity 128.

Although acute angle 264 is illustrated in FIG. 2 as being defined in a counterclockwise direction from a downstream side of axis 30, it should be understood that acute angle 264 also may be defined in a clockwise direction from an upstream side of axis 30, i.e., the disclosure contemplates that acute angle 264 also may be formed by conduit 262 oriented in a mirror image of the orientation shown in FIG. 2.

Additionally or alternatively, access to a portion of outer casing 122 by a conduit 260 oriented at approximately a 90-degree angle relative to axis 30 is obstructed by at least one external component 15. For example, but not by way of limitation, external component 15 is a fuel supply manifold associated with rotary machine 10. Conduit 262 oriented at acute angle 264 relative to axis 30 facilitates coupling of outlet 263 to outer casing 122 at a preselected axial and/or circumferential location on outer casing 122 that would otherwise be obstructed by the at least one external component 15.

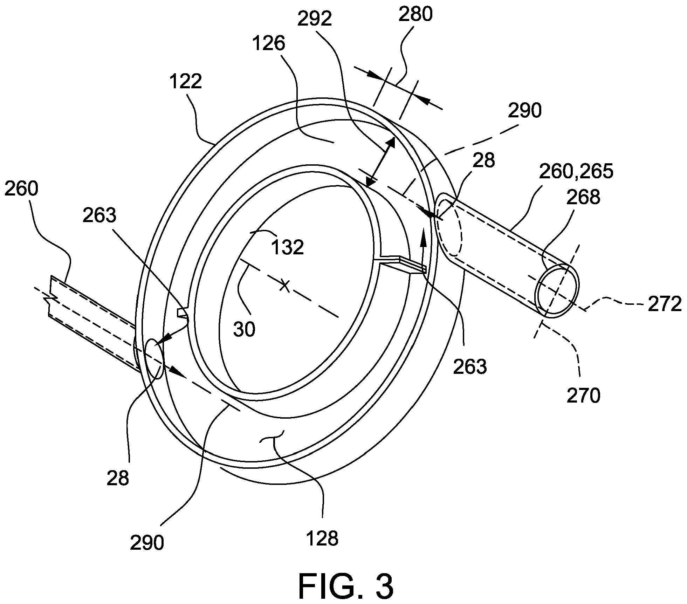

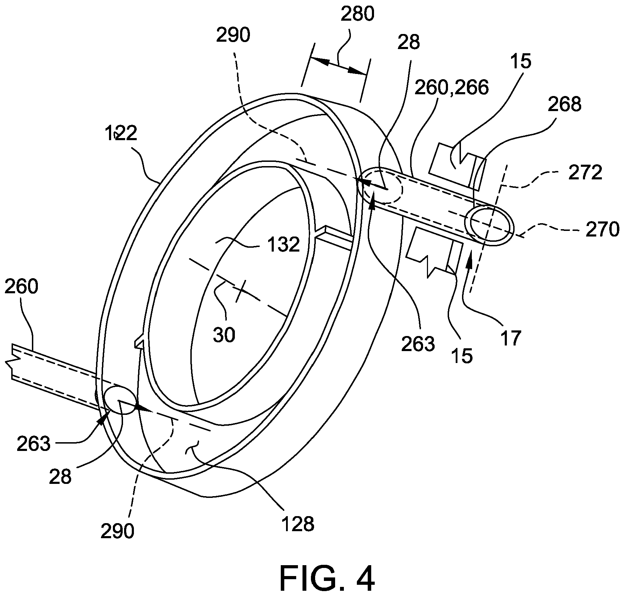

FIG. 3 is a schematic perspective illustration of an embodiment conduit 260, designated conduit 265, coupled to outer casing 122. FIG. 4 is a schematic perspective illustration of a third exemplary conduit 260, designated conduit 266, coupled to outer casing 122. Each of conduit 265 and conduit 266 has a cross-section 268 that is asymmetric about a longitudinal axis 290 of respective conduit 265 or 266. More specifically, in certain embodiments, each of conduit 265 and conduit 266 has cross-section 268 that defines a major dimension 270 and a minor dimension 272. For example, in the illustrated embodiments, each of conduit 265 and conduit 266 defines cross-section 268 that is ovoid and defines a major axis 270 and a minor axis 272. In alternative embodiments, each of conduit 265 and conduit 266 has any suitable axially asymmetric shape that defines a major dimension 270 and minor dimension 272, such as a generally rectangular shape that defines a major side length 270 and a minor side length 272.

Each cavity 128 has an axial length 280 measured parallel to axis 30. For example, length 280 is defined between an adjacent pair of partitions 126. In FIGs. 3 and 4, one partition 126 that defines axial length 280 of cavity 128 is rendered transparent for ease of explanation. In certain embodiments, cross-section 268 is oriented such that cross-section 268 extends across substantially an entirety of axial length 280. For example, in the exemplary embodiment, one of major dimension 270 and minor dimension 272 is substantially equal to, and oriented parallel to, length 280 of the corresponding cavity 128. In some such embodiments, orientation of cross-section 268 to extend across substantially an entirety of axial length 280 facilitates more uniform circulation of cooling fluid 28 along an axial extent of cavity 128.

For example, in the embodiment illustrated in FIG. 3, axial length 280 of cavity 128 is relatively narrow, and cross-section 268 is oriented such that minor dimension 272 is substantially parallel to axis 30. Moreover, minor dimension 272 is substantially equal to length 280, and major dimension 270 is sized to facilitate providing a preselected flow rate of cooling fluid 28 that is required to satisfy cooling requirements for the portion of inner casing 132, and/or components of rotary machine 100 coupled radially inwardly of inner casing 132, adjacent cavity 128. In certain embodiments, minor dimension 272 being substantially equal to length 280 facilitates uniformity of circulation of cooling fluid 28 along an axial extent of cavity 128.

For another example, in the embodiment illustrated in FIG. 4, axial length 280 of cavity 128 is relatively wide, and cross-section 268 is oriented such that major dimension 270 is substantially parallel to axis 30. Moreover, major dimension 270 is substantially equal to length 280, and minor dimension 272 is sized to facilitate providing a preselected flow rate of cooling fluid 28 that is required to satisfy cooling requirements for the portion of inner casing 132, and/or components of rotary machine 100 coupled radially inwardly of inner casing 132, adjacent cavity 128. In certain embodiments, major dimension 270 being substantially equal to length 280 facilitates uniformity of circulation of cooling fluid 28 along an axial extent of cavity 128.

Additionally or alternatively, access to a portion of outer casing 122 by a properly sized conduit 260 having a circular cross-section (not shown) is obstructed by at least one external component 15. For example, but not by way of limitation, a gap 17 between two external components 15 is too narrow to permit passage of conduit 260 having a circular cross-section (not shown) sized to provide a preselected flow rate of cooling fluid 28. In some such embodiments, at least one of conduit 265 and conduit 266 having axially asymmetric cross-section 268 is receivable through gap 17. More specifically, minor dimension 272 is receivable through gap 17, while major dimension 270 is sized to provide the preselected flow rate of cooling fluid 28, thereby facilitating coupling of outlet 263 to outer casing 122 at a preselected axial and/or circumferential location on outer casing 122 that would otherwise be obstructed by the at least one external component 15.

It should be understood that, in some embodiments, a first conduit 260 of a plurality of conduits 260 has a cross-section that differs from a cross-section of a second conduit 260 of the plurality of conduits 260.

In certain embodiments, at least one of conduit 265 and conduit 266 is further oriented at acute angle 264 relative to axis 30, as described above with respect to conduit 262 (shown in FIG. 2). Alternatively, each of conduit 265 and conduit 266 is oriented at approximately 90 degrees relative to axis 30.

In the embodiments illustrated in FIGs 3 and 4, each conduit 260 is further oriented such that longitudinal axis 290 of conduit 260 proximate to outlet 263 is oriented tangentially to cavity 128. For example, a radial height 292 of cavity 128 is defined between inner casing 132 and outer casing 122, and longitudinal axis 290 of tangentially oriented conduit 260 intersects a radial line drawn between inner casing 132 and outer casing 122 at a point that is within about 20 percent to about 80 percent of radial height 292. In some embodiments, orientation of longitudinal axis 290 tangentially to cavity 128 further facilitates improved circulation of cooling fluid 28 within cavity 128, as compared to conduit 260 oriented such that longitudinal axis 290 proximate to outlet 263 is directed towards inner casing 132. For example, orientation of longitudinal axis 290 tangentially to cavity 128 reduces direct impingement of cooling fluid 28 on inner casing 132 proximate to outlet 263, as compared to longitudinal axis 290 oriented towards inner casing 132, thereby reducing or eliminating regions of turbulence and/or stagnation of cooling fluid 28 within cavity 128. For another example, orientation of longitudinal axis 290 tangentially to cavity 128 reduces localized impingement cooling of inner casing 132 proximate to outlet 263, thereby facilitating more uniform cooling around a circumference of inner casing 132. Alternatively, each conduit 260 is oriented such that longitudinal axis 290 of conduit 260 proximate to outlet 263 is oriented towards inner casing 132.

In some embodiments, at least one tangentially oriented conduit 260 is further oriented at acute angle 264 relative to axis 30, as described above with respect to conduit 262 (shown in FIG. 2). Alternatively, each tangentially oriented conduit 260 is oriented at approximately 90 degrees relative to axis 30.

Embodiments of systems that include cooling fluid supply conduits coupled in flow communication to at least one cavity defined between inner and outer casings are described above. The embodiments described herein provide advantages over at least some known systems. Specifically, some embodiments include supply conduits oriented at an acute angle relative to an axis of the casing to facilitate more uniform circulation of cooling fluid along an axial length of the cavity, and/or to facilitate routing of the conduit between external components that surround the outer casing. Also specifically, certain embodiments include supply conduits having an axially asymmetric cross-section that extends across substantially an entire axial length of the cavity to facilitate more uniform circulation of cooling fluid along an axial length of the cavity, and/or to facilitate routing of the conduit between external components that surround the outer casing. Also specifically, in some embodiments a longitudinal axis of the conduit proximate to an outlet of the conduit is oriented tangentially to the cavity to reduce localized impingement cooling of the inner casing, thereby reducing regions of turbulence and/or stagnation of cooling fluid and/or facilitating more uniform cooling around a circumference of the inner casing. Each of these embodiments, implemented alone or in combination, tend to reduce a potential for the inner casing to become out of round due to uneven heating, and therefore reduce or eliminate design requirements for the inner and outer casings to accommodate the potential out-of-round condition.

Exemplary embodiments of cooling systems for cavities defined between inner and outer casings are described above in detail. The disclosure is not limited to the specific embodiments described herein, but rather, components of the systems and/or steps of methods may be utilized independently and separately from other components and/or steps described herein. For example, the configuration of components described herein may also be used in combination with other applications, and is not limited to practice with a rotary machine as described herein. Rather, the exemplary embodiment can be implemented and utilized in connection with many applications where cooling of circumferentially extending cavities is desired.

Although specific features of various embodiments of the present disclosure may be shown in some drawings and not in others, this is for convenience only. In accordance with the principles of the present disclosure, any feature of a drawing may be referenced and/or claimed in combination with any feature of any other drawing.

This written description uses examples to disclose the embodiments of the present disclosure, including the best mode, and also to enable any person skilled in the art to practice the disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (10) for providing cooling fluid for a rotary machine comprising:
an inner casing (132);
an outer casing (122) extending circumferentially about, and spaced radially outward from, said inner casing such that at least one cavity (128) is defined therebetween; and
at least one conduit coupled to said outer casing in flow communication with said at least one cavity, said at least one conduit (260) oriented at an acute angle (264) relative to a longitudinal axis (290) of said outer casing,
**characterized in that** said at least one conduit is further oriented such that a longitudinal axis (290) of said at least one conduit proximate to an outlet (263) of said conduit is oriented tangentially to the inner casing of the at least one cavity.

2. The system in accordance with Claim 1, wherein said inner and outer casings are components of a rotary machine (10), said at least one conduit is coupled in flow communication to a compressor section (14) of said rotary machine.

3. The system in accordance with Claim 1 or 2, wherein said at least one conduit has a cross-section (268) that is axially asymmetric.

4. The system in accordance with Claim 3, wherein said at least one cavity has an axial length (280), said cross-section (268) extends across substantially an entirety of said axial length.

5. The system in accordance with Claim 3 or Claim 4, wherein said cross-section (268) defines a major dimension (270) and a minor dimension (272), one of said major dimension and said minor dimension is substantially equal to, and oriented parallel to, said axial length.

6. The system in accordance with Claim 5, wherein said cross-section (268) is ovoid, said major dimension comprises a major axis, and said minor dimension comprises a minor axis.

7. The system in accordance with any preceding Claim, wherein said longitudinal axis of said at least one tangentially oriented conduit intersects a radial line drawn between said inner casing and said outer casing at a point that is within about 20 percent to about 80 percent of a radial height (292) of said at least one cavity.

## Patentansprüche

1. System (10) zum Bereitstellen eines Kühlfluids für eine Rotationsmaschine, umfassend:
ein inneres Gehäuse (132);
ein äußeres Gehäuse (122), das sich in Umfangsrichtung um das innere Gehäuse erstreckt, und von diesem radial nach außen beabstandet ist, so dass mindestens ein Hohlraum (128) dazwischen definiert wird; und
mindestens eine Leitung, die mit dem äußeren Gehäuse in Strömungsverbindung mit dem mindestens einen Hohlraum gekoppelt ist, wobei die mindestens eine Leitung (260) in einem spitzen Winkel (264) relativ zu einer Längsachse (290) des äußeren Gehäuses ausgerichtet ist,
**dadurch gekennzeichnet, dass** die mindestens eine Leitung ferner derart ausgerichtet ist, dass eine Längsachse (290) der mindestens einen Leitung nahe eines Auslasses (263) der Leitung tangential zu dem inneren Gehäuse des mindestens einen Hohlraums ausgerichtet ist.

2. System nach Anspruch 1, wobei die inneren und äußeren Gehäuse Komponenten einer Rotationsmaschine (10) sind, wobei die mindestens eine Leitung in Strömungsverbindung mit einem Verdichterabschnitt (14) der Rotationsmaschine gekoppelt ist.

3. System nach Anspruch 1 oder 2, wobei die mindestens eine Leitung einen Querschnitt (268) aufweist, der axial unsymmetrisch ist.

4. System nach Anspruch 3, wobei der mindestens eine Hohlraum eine axiale Länge (280) aufweist, wobei sich der Querschnitt (268) im Wesentlichen über eine Gesamtheit der axialen Länge erstreckt.

5. System nach Anspruch 3 oder Anspruch 4, wobei der Querschnitt (268) eine große Abmessung (270) und eine kleine Abmessung (272) definiert, wobei eine von der großen Abmessung und der kleinen Abmessung im Wesentlichen gleich, und parallel ausgerichtet zu, der axialen Länge ist.

6. System nach Anspruch 5, wobei der Querschnitt (268) oval ist, wobei die große Abmessung eine große Achse umfasst, und die kleine Abmessung eine kleine Achse umfasst.

7. System nach einem der vorstehenden Ansprüche, wobei die Längsachse der mindestens einen tangential ausgerichteten Leitung eine radiale Linie, die zwischen dem inneren Gehäuse und dem äußeren Gehäuse gezogen wird, an einem Punkt kreuzt, der innerhalb von etwa 20 Prozent bis etwa 80 Prozent einer radialen Höhe (292) des mindestens einen Hohlraums liegt.

## Revendications

1. Système (10) pour fournir un fluide de refroidissement pour une machine rotative comprenant :
un carter intérieur (132) ;
un carter extérieur (122) s'étendant de manière circonférentielle autour, et espacé radialement vers l'extérieur, dudit carter intérieur de telle sorte qu'au moins une cavité (128) est définie entre eux ; et
au moins un conduit couplé audit carter extérieur en communication fluidique avec ladite au moins une cavité, ledit au moins un conduit (260) orienté selon un angle aigu (264) par rapport à un axe longitudinal (290) dudit carter extérieur,
**caractérisé en ce que** ledit au moins un conduit est en outre orienté de telle sorte qu'un axe longitudinal (290) dudit au moins un conduit à proximité d'une sortie (263) dudit conduit est orienté de manière tangentielle par rapport au carter intérieur de l'au moins une cavité.

2. Système selon la revendication 1, dans lequel lesdits carters intérieur et extérieur sont des composants d'une machine rotative (10), ledit au moins un conduit est couplé en communication fluidique avec une partie de compresseur (14) de ladite machine rotative.

3. Système selon la revendication 1 ou 2, dans lequel ledit au moins un conduit a une section transversale (268) qui est axialement asymétrique.

4. Système selon la revendication 3, dans lequel ladite au moins une cavité a une longueur axiale (280), ladite section transversale (268) s'étend essentiellement à travers une totalité de ladite longueur axiale.

5. Système selon la revendication 3 ou la revendication 4, dans lequel ladite section transversale (268) définit une dimension majeure (270) et une dimension mineure (272), une de ladite dimension majeure et de ladite dimension mineure est essentiellement égale à, et orientée parallèlement à, ladite longueur axiale.

6. Système selon la revendication 5, dans lequel ladite section transversale (268) est ovoïde, ladite dimension majeure comprend un axe majeur, et ladite dimension mineure comprend un axe mineur.

7. Système selon l'une quelconque des revendications précédentes, dans lequel ledit axe longitudinal dudit au moins un conduit orienté de manière tangentielle coupe une ligne radiale tirée entre ledit carter intérieur et ledit carter extérieur à un point qui est entre 20 pour cent à environ 80 pour cent d'une hauteur radiale (292) de ladite au moins une cavité.
